# EUROPÄISCHE PATENTSCHRIFT

(11) **EP 2 406 510 B1**
(45) Veröffentlichungstag und Bekanntmachung des Hinweises auf die Patenterteilung: **22.06.2016**
(21) Anmeldenummer: 10709476.5
(22) Anmeldetag: 10.03.2010
(51) Int. Cl.: F16C 33/26

(54) **GLEITSTOPFEN UND GLEITELEMENT**
SLIDING PLUG AND SLIDING ELEMENT
BOUCHON GLISSANT ET ÉLÉMENT GLISSANT

(30) Priorität: 11.03.2009 DE 102009001495
(43) Veröffentlichungstag der Anmeldung: 18.01.2012
(73) Patentinhaber: Federal-Mogul Deva GmbH, 35260 Stadtallendorf (DE)
(72) Erfinder: MÜLLER-BRODMANN, Martin, 35096 Weimar (DE); SCHLOSS, Alexander, 36320 Kirtorf (DE)
(74) Vertreter: Mehler Achler
(86) Internationale Anmeldenummer: PCT/EP2010/053036
(87) Internationale Veröffentlichungsnummer: WO 2010/103041

(56) Entgegenhaltungen:
- CH-A5- 684 124
- DE-A1- 1 923 497
- DE-A1-102007 025 239
- DE-U1- 8 606 095
- JP-A- 11 351 260
- US-A- 5 927 860
- US-A1- 2008 178 430

## Beschreibung

Die Erfindung betrifft einen Gleitstopfen zum Einsetzen in einen Trägerkörper eines Gleitelements, das eine Gleitfläche aufweist, mit einer einem Gleitpartner zugewandten Stirnfläche und mit einer Umfangsfläche. Die Erfindung betrifft auch ein Gleitelement mit einem Trägerkörper, mit einer Gleitfläche und mit mindestens einer Aufnahmebohrung, in der ein derartiger Gleitstopfen eingesetzt ist.

Um die Reibung bei Relativbewegungen zweier Maschinenteile zu reduzieren, werden üblicherweise Gleitlagersysteme eingesetzt, die aus Gleitelementen bestehen. Wenn bei solchen Gleitlagersystemen auf eine Öl- oder Fettschmierung verzichtet werden soll, werden in der Regel Lagerwerkstoffe mit eingelagerten Festschmierstoffen eingesetzt. Dabei können z. B. in einem Trägerkörper Gleitstopfen angeordnet sein, die diesen Festschmierstoff enthalten. Solche Gleitstopfen sind beispielsweise aus G 8606095.3 bekannt.

Insbesondere bei Anwendungen im Hochtemperaturbereich ist es vorteilhaft, wenn die Stopfen selbst aus einer Metall-Festschmierstoffmischung bestehen.

Nachteilig bei diesen Systemen sind die unterschiedlichen thermischen Ausdehnungskoeffizienten von Trägerkörpern und Gleitstopfen sowie die unterschiedlichen Oxidationsverhalten des Materials des Trägerkörpers und des Stopfenwerkstoffs.

Die im Betrieb entstehenden Spannungen durch unterschiedliche Durchmesseränderungen bedingt durch die Unterschiede in der thermischen Ausdehnung und im Oxidationsverhalten, führen zu enormen Druckspannungen mit der Folge, dass der Stopfenwerkstoff Risse zeigt. Aufgrund dieser Rissbildung kann schließlich der

Gleitstopfen in Bruchstücken aus der eigentlichen Aufnahmebohrung des Trägerkörpers herausfallen.

Daher werden die Gleitstopfen z. B. in den Gleitschuhen von Aluminiumstoßöfen mit abgesetzten Durchmessern gefertigt. Die entsprechende Aufnahmebohrung im Trägerkörper ist ebenfalls abgesetzt ausgeführt. Die Gleitstopfen weisen ein deutliches Untermaß gegenüber der Aufnahmebohrung auf, werden aber über den verdickten Bunddurchmesser am Herausfallen gehindert.

Um diese abgesetzten Durchmesser an den Gleitstopfen sicherzustellen ist eine mechanische Bearbeitung erforderlich. Die Herstellung einer presstechnisch erzeugten, abgesetzten Geometrie ist bei diesen Werkstoffen nicht prozesssicher, da wegen der hohen Festschmierstoffanteile am Übergang vom größeren zum kleineren Durchmesser extreme Rissbildungsgefahr am Grünling besteht.

Es ist daher Aufgabe der Erfindung, einen Gleitstopfen anzugeben, der einfach herzustellen ist, sicher in seiner Aufnahmebohrung gehalten wird und im Betrieb möglichst keine Rissbildung zeigt.

Diese Aufgabe wird mit einem Gleitstopfen gelöst, dessen Umfangsfläche mindestens eine sich in Längsrichtung des Gleitstopfens erstreckende Rippe aufweist.

Die Umfangsfläche bildet den größten Teil des Umfangs, während die Rippe oder die Rippen den kleineren Teil des Umfangs einnehmen.

Es hat sich gezeigt, dass mittels der Rippe/Rippen der Gleitstopfen in der Aufnahmebohrung klemmend gehalten werden kann und dass zwischen den Rippen genug Freiraum verbleibt, in dem sich der Gleitstopfen ausdehnen kann, ohne dass dies zu überhöhter Druckspannung und Rissbildung führt. Auf einen abgesetzten Rand kann verzichtet werden, so dass die Herstellung vereinfacht wird. Der oder die Rippen werden bei der Herstellung des Stopfens ausgebildet, d. h. angeformt.

Die Gleitstopfen lassen sich mit durchgehend gleichbleibendem Querschnitt pulvermetallurgisch prozesssicher herstellen und benötigen keine nachträgliche mechanische Bearbeitung.

Vorzugsweise sind maximal zehn Rippen vorgesehen. Eine Begrenzung auf maximal zehn Rippen ist zweckmäßig, damit zwischen den Rippen ausreichend Freiraum verbleibt, in den sich der Gleitstopfen im Betrieb ausdehnen kann.

Vorzugsweise werden drei bis fünf Rippen an der Umfangswand des Stopfens ausgebildet.

Mindestens eine Rippe steht gegenüber der Umfangsfläche nach außen vor. Die Rippe ist nach außen weisend angeordnet.

Die Rippen sind vorzugsweise gleichmäßig über die Umfangsfläche verteilt, was den Vorteil hat, dass Druckspannungen im Betrieb auch gleichmäßig auf den Gleitstopfen verteilt werden, wodurch die Rissbildung durch örtliche Überlastung weitgehend vermieden werden kann.

Vorzugsweise weisen die Rippen einen dreieckförmigen, einen halbkreisförmigen oder trapezförmigen Querschnitt auf.

Vorzugsweise besitzt der Gleitstopfen eine zylinderförmige Gestalt mit einer Mantelfläche, wobei die Rippe an der Mantelfläche des Zylinders angeordnet ist. Die Rippe ist nach außen weisend angeordnet, wobei der Scheitelpunkt der Rippe einen Umfangskreis definiert, der einen Durchmesser D₂ ausweist. Die zylinderförmige Mantelfläche besitzt einen Durchmesser D₁, wobei D₁ < D₂ ist.

Die Dicke D der Rippe beträgt vorzugsweise 2% bis 4% des Durchmessers D₁ der Umfangsfläche des Gleitstopfens, insbesondere des Durchmessers D₁ des Zylindermantels.

Je kleiner der thermische Ausdehnungskoeffizient des Gleitstopfenmaterials ist, desto kleiner kann die Dicke D gewählt werden.

Das Gleitstopfenmaterial weist vorzugsweise eine Matrix aus einem Chrom-Nickel-Stahl auf, wobei in die Matrix Festschmierstoff eingelagert ist.

Vorzugsweise erstreckt sich die Rippe über mindestens 50 % der Stopfenlänge. Eine vollständige Erstreckung über die Stopfenlänge ist bevorzugt, weil dies die Herstellung der Gleitstopfen erleichtert. Bei geringeren Rippenlängen ist u. U. eine weitere Bearbeitung erforderlich.

Der Gleitstopfen kann an seiner Stirnfläche mit einer umlaufenden Fase ausgeführt sein. Diese Fase hat den Vorteil, dass das Fügen des Gleitstopfens in den Träger erleichtert wird. Es ist auch möglich, eine Fase am Rand der der Aufnahmebohrung vorzusehen.

Das erfindungsgemäße Gleitelement ist mit dem efindungsgemäßen Gleitstopfen bestückt.

Die Aufnahmebohrung weist vorzugsweise einen durchmesserkleinen und einen durchmessergroßen Abschnitt aufweist, wobei der durchmessergroße Abschnitt der Gleitfläche abgewandt ist.

Die Rippe des Gleitstopfens erstreckt sich mindestens über die Länge des durchmesserkleinen Abschnitts. Dies hat den Vorteil, dass sich auch ein Abschnitt der Rippe im durchmessergroßen Abschnitt befindet. Während die Rippe im durchmesserkleinen Abschnitt während des Betriebs deformiert und u. U. gänzlich aufgelöst wird, bleibt die Rippe im durchmessergroßen Abschnitt unter Ausbildung einer Widerlagerfläche am Übergang zum durchmesserkleinen Abschnitt erhalten, so dass sich der Gleitstopfen mit dieser Widerlagerfläche an der Ringschulter zwischen durchmesser kleinem und durchmessergroßem Abschnitt abstützen kann.

Der Durchmesser D₂ der Einhüllenden der Rippen ist vorzugsweise größer als der Durchmesser D₃ des durchmesserkleinen Abschnitts. Vorzugsweise ist eine geringfügige Überdeckung im Bereich von 0,1 bis 0,5 mm vorgesehen. Damit wird beim Einpressen des Gleitstopfens die Spitze der Rippe leicht abgeflacht. Im durchmessergroßen Abschnitt der Aufnahmebohrung, der nach dem Stand für die Aufnahme eines Bundes vorgesehen war, werden die Rippen nicht deformiert und behalten ihre Ursprungsgeometrie bei. Die Einpresskräfte sind insgesamt dadurch relativ gering.

Vorzugsweise ist der Durchmesser des Zylindermantels kleiner als der Durchmesser des durchmesserkleinen Abschnitts.

Im Betrieb unter oxidierender Atmosphäre, deren Temperatur typischerweise bei 620°C liegt, kommt es zum erwarteten Wachsen des Durchmessers des aus vorzugsweise Chrom-Nickel-Stahl bestehenden Gleitstopfens gegenüber dem Durchmesser der Bohrung. Das erfindungsgemäße verfügbare Volumen zwischen dem eigentlichen Stopfendurchmesser, also ohne Berücksichtigung der Rippenkontur, entspricht dem früher gewählten Spiel und stellt das notwendige Ausdehnungsvolumen für den Gleitstopfen sicher.

Es kann unter Betriebstemperatur durchaus zu einer weiteren plastischen Verformung der Rippen kommen, aber selbst bei solcher Nachverformung der Rippen im Pressbereich sichert die verbleibende Überdeckung zwischen den freiliegenden Rippen in der Zone des größeren Durchmessers die Stopfen - insbesondere auch im kalten Zustand - zuverlässig gegen Herausfallen.

Der Trägerkörper besteht vorzugsweise aus Grauguss. Grauguss hat den Vorteil, dass der freie Graphitanteil ebenfalls eine Schmierwirkung besitzt.

Beispielhafte Ausführungen der Erfindung werden nachfolgend anhand der Zeichnungen näher erläutert. Es zeigen:
- Figur 1: eine Draufsicht auf ein Gleitelement, das mit einer Vielzahl von Gleitstopfen bestückt ist,
- Figur 2: eine perspektivische Darstellung eines Stopfen,
- Figur 3: eine Draufsicht auf einen Gleitstopfen,
- Figur 4a, b, c: Detailansichten von Rippengeometrien,
- Figur 5: eine vergrößerte Darstellung eines eingesetzten Gleitstopfen in einen Trägerkörper vor dem Betrieb,
- Figur 6: einen Schnitt durch den Gleitstopfen in Figur 4 längs der Linie V - V und
- Figur 7: einen Schnitt entsprechend des Schnitts der Figur 5 für
einen sich im Betrieb befindlichen Stopfen.

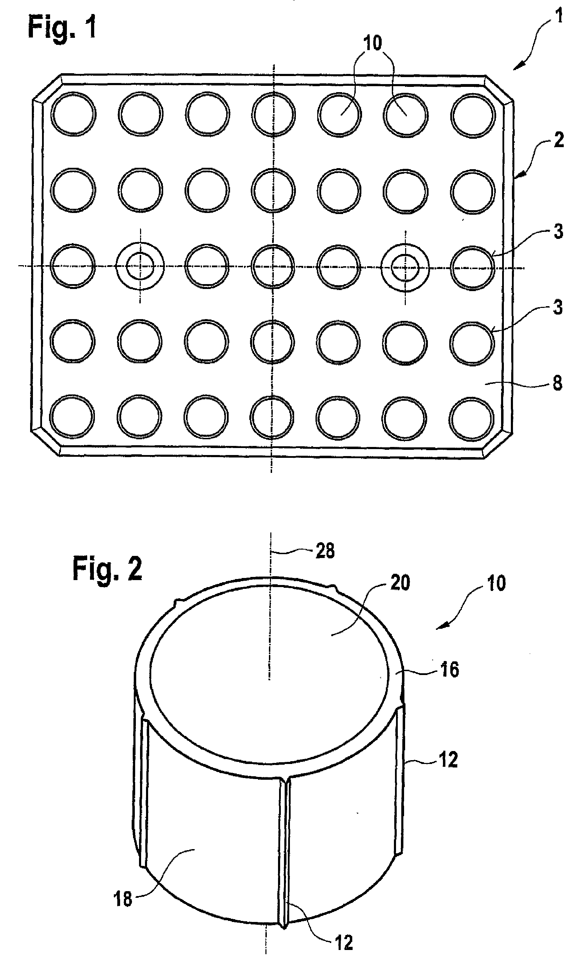

In der Figur 1 ist die Draufsicht auf die Gleitfläche 8 eines Gleitelements 1 dargestellt, das in seinem Trägerkörper 2 mehrere Lochreihen mit Aufnahmebohrungen 3 aufweist. In den Aufnahmebohrungen 3 sind Gleitstopfen 10 eingesetzt. Das Gleitelement 1 ist ein plattenförmiges Element.

In der Figur 2 ist ein solcher Gleitstopfen 10 perspektivisch dargestellt. Der Gleitstopfen 10 weist eine zylinderförmige Gestalt auf und besitzt an der Umfangsfläche, d. h. auf der Mantelfläche, insgesamt fünf Rippen 12 auf. Die Rippen 12 sind gleichmäßig über die Mantelfläche 18 verteilt und erstrecken sich parallel zur Längsachse 28 des Gleitstopfens 10. Die Stirnfläche 20 besitzt am Rand eine Fase 16.

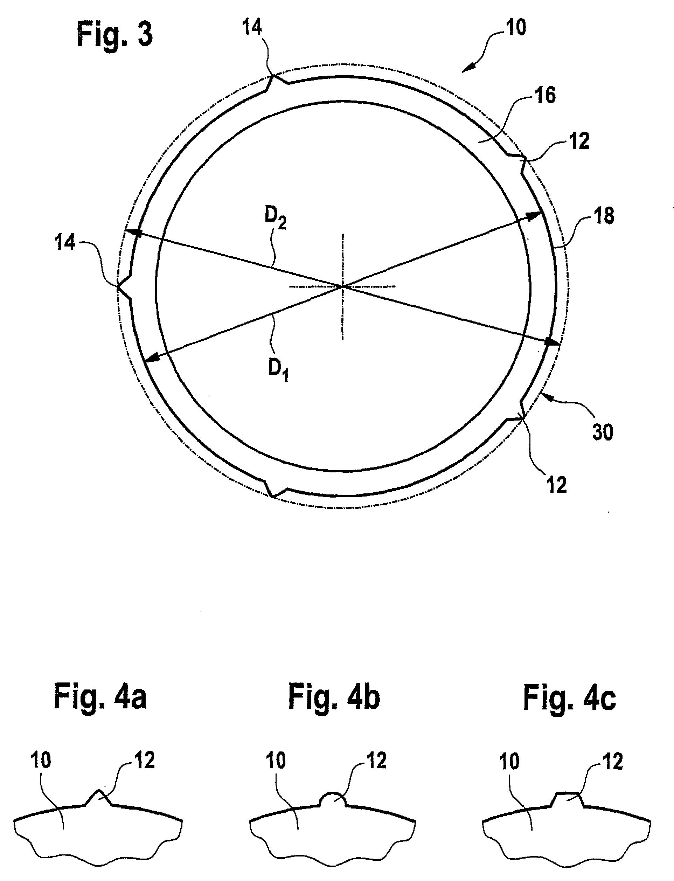

In der Figur 3 ist eine Draufsicht auf die Stirnfläche 20 des in Figur 2 gezeigten Gleitstopfens 10 dargestellt. Der Durchmesser des Zylindermantels ist mit D₁ gekennzeichnet. Zusätzlich ist die Einhüllende 30 der Rippen 12 eingezeichnet, die durch die Scheitelpunkte oder Spitzen 14 der dreieckförmig ausgebildeten Rippen 12 verläuft. Die Einhüllende 30 besitzt einen Durchmesser D₂, der größer ist als der Durchmesser D₁.

In den Figuren 4a, b, c sind drei verschiedene Rippengeometrien mit dreiecksförmigem, halbkreisförmigem und trapezförmigem Querschnitt dargestellt.

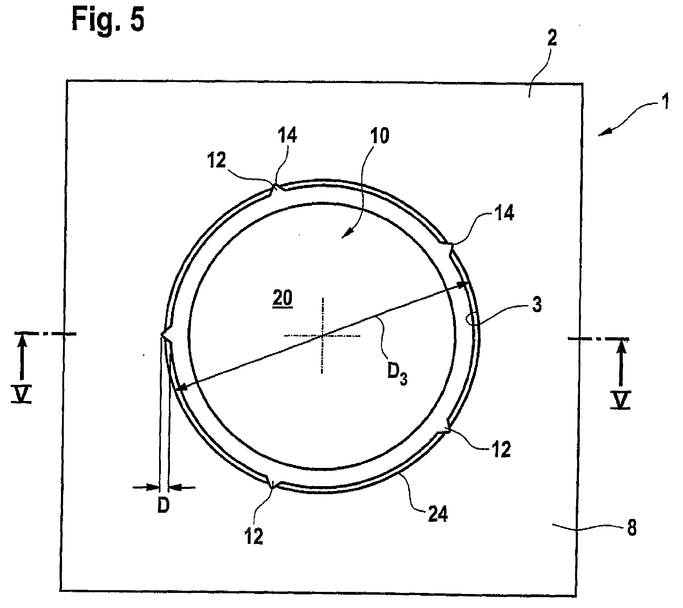

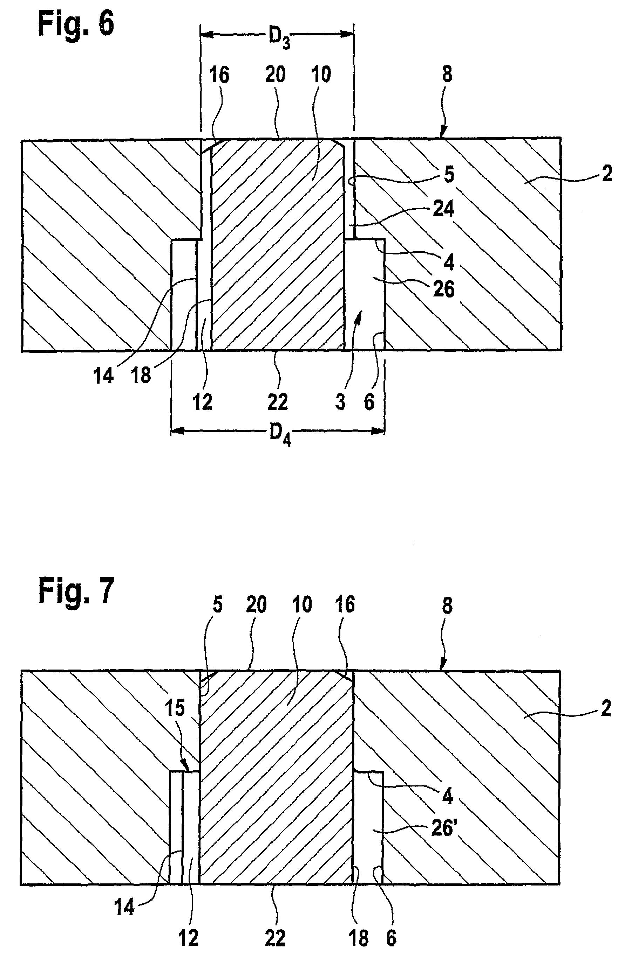

In der Figur 5 ist ein solcher mit fünf Rippen 12 versehener Gleitstopfen 10 in einen Trägerkörper 2 eines Gleitelementes 1 eingesetzt. Es ist zu sehen, dass der Durchmesser D₁ geringer ist, als der Durchmesser D₃ des durchmesserkleinen Abschnitts 5 der Aufnahmebohrung 3 (s. auch Figur 6). Dadurch wird ein Ringspalt 24 gebildet. Die Dicke D der Rippen 12, die sich aus D2 - D1 ergibt, ist größer gewählt als die Breite des Ringspalts 24. Dies bedeutet, dass der Durchmesser D₂ größer ist als der Durchmesser D₃. Für einen Gleitstopfen 10 mit beispielsweise einem Durchmesser D₁ von 25 mm bis 30 mm kann die Dicke D der Rippen mit D = 0,5 mm gewählt werden.

Es empfiehlt sich bei der Bemessung der Dicke D auch den thermischen Ausdehnungskoeffizienten des Gteitstopfenmaterials zu berücksichtigen, damit unter Hitzeeinwirkung keine zu großen Druckspannungen auftreten, die den Gleitstopfen zerstören könnten. Deshalb sollte D umso größer gewählt werden, je größer der thermische Ausdehnungskoeffizient des Gleitstopfenmaterials ist.

Beim Einsetzen greifen die Spitzen 14 an der Innenfläche der Aufnahmebohrung 3 an und werden dort geringfügig deformiert bzw. deformieren geringfügig die Innenflächen der Aufnahmebohrung 3. Dies ist in der Figur 5 nur schematisch dargestellt.

In der Figur 6 ist ein Schnitt längs der Linie V - V durch das Gleitelement 1 gemäß der Figur 5 dargestellt. Es ist zu sehen, dass die Aufnahmebohrung 3 einen oberen durchmesserkleinen Abschnitt 5 mit dem Durchmesser D₃ und einen sich nach unter anschließenden durchmessergroßen Abschnitt 6 mit dem Durchmesser D₄ aufweist. Zwischen beiden Abschnitten 5 und 6 weist die Aufnahmebohrung 3 eine Ringschulter 4 auf.

Der Gleitstopfen 10 ist in die Aufnahmebohrung 3 eingesetzt, wobei zwischen der Mantelfläche 18 und der Innenfläche des durchmesserkleinen Abschnitts 5 der Ringspalt 24 freibleibt.

Es ist ferner zu sehen, dass die Rippe 12 im durchmesserkleinen Abschnitt 5 etwas deformiert ist, so dass die Spitze 14 etwas abgeflacht wird. Im durchmessergroßen Abschnitt 6, der einen deutlich größeren Durchmesser aufweist als die Einhüllende D₂, verbleibt ein Ringraum 26, der so groß ist, dass auch die Spitze 14 der Rippe 12 noch beabstandet zur Innenfläche des durchmessergroßen Abschnitts 6 angeordnet ist. Es steht somit in beiden Abschnitten 5 und 6 ausreichend Raum zur Verfügung, in den sich der Gleitstopfen 10 im Betrieb ausdehnen kann.

In der Figur 7 ist die Betriebssituation dargestellt. Es ist zu sehen, dass sich der zylindrische Teil des Stopfens 10 unter Hitzeeinwirkung so weit ausgedehnt hat, dass er die Abmessungen des durchmesserkleinen Abschnitts 5 erreicht. Dies bedeutet, dass die Rippen 12 in diesem Bereich vollständig verschwinden können, wenn dies für den Spannungsabbau benötigt wird. Die Rippen 12 im durchmessergroßen Bereich 6 sind erhalten geblieben, wobei sich im Bereich der Schulter 4 eine Widerlagerfläche 15 an den Rippen ausbildet, die den Gleitstopfen 10 auch im kalten Zustand am Herausfallen aus der Aufnahmebohrung 3 hindert.

In der gezeigten Darstellung sind die Durchmesserunterschiede übertrieben dargestellt. Der Durchmesserunterschied kann auf das Spannvolumen beschränkt sein.

Nach unten kann der Gleitstopfen 10 nicht herausfallen, weil die Bodenfläche 22 auf einem nicht dargestellten Maschinenteil aufliegt. Der Ringraum 26 hat sich im Betrieb auf den Ringraum 26' verkleinert.

### Bezugszeichenliste

- 1: Gleitelement
- 2: Trägerkörper
- 3: Aufnahmebohrung
- 4: Ringschulter
- 5: durchmesserkleiner Abschnitt
- 6: durchmessergroßer Abschnitt
- 8: Gleitfläche
- 10: Gleitstopfen
- 12: Rippe
- 14: Spitze
- 15: Widerlagerfläche
- 16: Fase
- 18: Umfangsfläche, Mantelfläche
- 20: Stirnfläche
- 22: Bodenfläche
- 24: Ringspalt
- 26, 26': Ringraum
- 28: Längsachse
- 30: Einhüllende
- D₁: Durchmesser des Zylindermantels
- D₂: Durchmesser der Einhüllenden
- D₃: Durchmesser des durchmesserkleinen Abschnitts
- D₄: Durchmesser des durchmessergroßen Abschnitts
- D: Dicke der Rippe 12

## Patentansprüche

1. Gleitstopfen (10) zum Einsetzen in einen Trägerkörper (2) eines Gleitelements (1), das eine Gleitfläche (8) aufweist, mit einer einem Gleitpartner zugewandten Stirnfläche (20) und mit einer Umfangsfläche (18),
**dadurch gekennzeichnet,**
**dass** die Umfangsfläche (18) mindestens eine sich in Richtung der Längsachse (28) des Gleitstopfens (10) erstreckende Rippe (12) aufweist.

2. Gleitstopfen nach Anspruch 1,
**dadurch gekennzeichnet,**
**dass** maximal zehn Rippen (12) vorgesehen sind.

3. Gleitstopfen nach einem der Ansprüche 1 oder 2,
**dadurch gekennzeichnet,**
**dass** die Rippen (12) gleichmäßig über die Umfangsfläche (18) verteilt sind.

4. Gleitstopfen nach einem der Ansprüche 1 bis 3,
**dadurch gekennzeichnet,**
**dass** die Rippen (12) einen dreieckförmigen, einen halbkreisförmigen oder trapezförmigen Querschnitt aufweisen.

5. Gleitstopfen nach einem der Ansprüche 1 bis 4,
**dadurch gekennzeichnet,**
**dass** er eine zylinderförmige Gestalt mit einer Mantelfläche (18) aufweist und dass sich die Rippe (12) an der Mantelfläche (18) befindet.

6. Gleitstopfen nach einem der Ansprüche 1 bis 5,
**dadurch gekennzeichnet,**
**dass** die Dicke D der Rippe (12) 2% bis 4% des Durchmessers D₁ der Umfangsfläche (18) des Gleitstopfens (10) beträgt.

7. Gleitstopfen nach einem der Ansprüche 1 bis 6,
**dadurch gekennzeichnet,**
**dass** das Material des Gleitstopfens (10) eine Matrix aus einem Chrom-Nickel-Stahl mit eingelagertem Festschmierstoff aufweist.

8. Gleitstopfen nach einem der Ansprüche 1 bis 7,
**dadurch gekennzeichnet,**
**dass** sich die Rippe (12) über mindestens 50 % der Länge des Gleitstopfens (10) erstreckt.

9. Gleitelement (1) mit einem Trägerkörper (2) mit einer Gleitfläche (8) und mit mindestens einer Aufnahmebohrung (3), in der ein Gleitstopfen (10) gemäß einem der Ansprüche 1 bis 8 eingesetzt ist.

10. Gleitelement nach Anspruch 9,
**dadurch gekennzeichnet,**
**dass** die Aufnahmebohrung (3) einen durchmesserkleinen Abschnitt (5) und einen durchmessergroßen Abschnitt (6) aufweist.

11. Gleitelement nach Anspruch 10,
**dadurch gekennzeichnet,**
**dass** der durchmessergroße Abschnitt (6) der Gleitfläche (8) abgewandt ist.

12. Gleitelement nach einem der Ansprüche 10 oder 11,
**dadurch gekennzeichnet,**
**dass** die Rippe (12) sich mindestens über die Länge des durchmesserkleinen Abschnitts (5) erstreckt.

13. Gleitelement nach einem der Ansprüche 10 bis 12,
**dadurch gekennzeichnet,**
**dass** der Durchmesser D₂ der Einhüllenden (30) der Rippen (12) größer als der Durchmesser D₃ des durchmesserkleinen Abschnitts (5) ist.

14. Gleitelement nach einem der Ansprüche 10 bis 13,
**dadurch gekennzeichnet,**
**dass** der Durchmesser D₂ der Einhüllenden (30) kleiner als der Durchmesser D₄ des durchmessergroßen Abschnitts (6) ist.

15. Gleitelement nach einem der Ansprüche 10 bis 14,
**dadurch gekennzeichnet,**
**dass** der Durchmesser D₁ des Gleitstopfens (10) kleiner als der Durchmesser D₃ des durchmesserkleinen Abschnitts (5) ist.

## Claims

1. Sliding plug (10) for insertion into a carrier member (2) of a sliding element (1) which has a sliding face (8), having an end face (20) which faces a sliding partner and having a peripheral face (18),
**characterised in that**
the peripheral face (18) has at least one rib (12) which extends in the direction of the longitudinal axis (28) of the sliding plug (10).

2. Sliding plug according to claim 1,
**characterised in that**
a maximum of ten ribs (12) are provided.

3. Sliding plug according to either claim 1 or claim 2,
**characterised in that**
the ribs (12) are distributed in a uniform manner over the peripheral face (18).

4. Sliding plug according to any one of claims 1 to 3,
**characterised in that**
the ribs (12) have a triangular, semi-circular or trapezoidal cross-section.

5. Sliding plug according to any one of claims 1 to 4,
**characterised in that**
it has a cylindrical structure with a covering face (18) and **in that** the rib (12) is located on the covering face (18).

6. Sliding plug according to any one of claims 1 to 5,
**characterised in that**
the thickness D of the rib (12) is from 2% to 4% of the diameter D₁ of the peripheral face (18) of the sliding plug (10).

7. Sliding plug according to any one of claims 1 to 6,
**characterised in that**
the material of the sliding plug (10) has a matrix of a chromium/nickel steel with embedded solid lubricant.

8. Sliding plug according to any one of claims 1 to 7,
**characterised in that**
the rib (12) extends over at least 50% of the length of the sliding plug (10).

9. Sliding element (1) having a carrier member (2) having a sliding face (8) and having at least one receiving hole (3) in which a sliding plug (10) according to any one of claims 1 to 8 is inserted.

10. Sliding element according to claim 9,
**characterised in that**
the receiving hole (3) has a portion (5) with a small diameter and a portion (6) with a large diameter.

11. Sliding element according to claim 10,
**characterised in that**
the portion (6) with the large diameter faces away from the sliding face (8).

12. Sliding element according to either claim 10 or claim 11,
**characterised in that**
the rib (12) extends at least over the length of the portion (5) with the small diameter.

13. Sliding element according to any one of claims 10 to 12,
**characterised in that**
the diameter D₂ of the envelope (30) of the ribs (12) is greater than the diameter D₃ of the portion (5) with the small diameter.

14. Sliding element according to any one of claims 10 to 13,
**characterised in that**
the diameter D₂ of the envelope (30) is smaller than the diameter D₄ of the portion (6) with the large diameter.

15. Sliding element according to any one of claims 10 to 14,
**characterised in that**
the diameter D₁ of the sliding plug (10) is smaller than the diameter D₃ of the portion (5) with the small diameter.

## Revendications

1. Bouchon glissant (10) à installer dans un corps porteur (2) d'un élément glissant (1) qui présente une surface de glissement (8), avec une surface frontale (20) tournée vers un partenaire de glissement et avec une surface périphérique (18),
**caractérisé en ce que** la surface périphérique (18) présente au moins une nervure (12) s'étendant dans la direction de l'axe longitudinal (28) du bouchon glissant (10).

2. Bouchon glissant selon la revendication 1, **caractérisé en ce qu'**il est prévu au maximum dix nervures (12).

3. Bouchon glissant selon la revendication 1 ou 2, **caractérisé en ce que** les nervures (12) sont uniformément réparties sur la surface périphérique (18).

4. Bouchon glissant selon l'une des revendications 1 à 3, **caractérisé en ce que** les nervures (12) présentent une section triangulaire, une section semi-circulaire ou une section trapézoïdale.

5. Bouchon glissant selon l'une des revendications 1 à 4, **caractérisé en ce qu'**il présente une forme cylindrique avec une surface d'enveloppe (18), et **en ce que** la nervure (12) se trouve sur la surface d'enveloppe (18).

6. Bouchon glissant selon l'une des revendications 1 à 5, **caractérisé en ce que** l'épaisseur D de la nervure (12) est égale à 2% à 4% du diamètre D₁ de la surface périphérique (18) du bouchon glissant (10).

7. Bouchon glissant selon l'une des revendications 1 à 6, **caractérisé en ce que** le matériau du bouchon glissant (10) présente une matrice constituée d'un acier au chrome-nickel avec un lubrifiant solide incorporé.

8. Bouchon glissant selon l'une des revendications 1 à 7, **caractérisé en ce que** la nervure (12) s'étend sur au moins 50 % de la longueur du bouchon glissant (10).

9. Elément glissant (1) avec un corps porteur (2) pourvu d'une surface de glissement (8) et d'au moins un perçage récepteur (3) dans lequel est installé un bouchon glissant (10) selon l'une des revendications 1 à 8.

10. Elément glissant selon la revendication 9, **caractérisé en ce que** le perçage récepteur (3) présente une partie (5) de faible diamètre et une partie (6) de fort diamètre.

11. Elément glissant selon la revendication 10, **caractérisé en ce que** la partie (6) de fort diamètre est opposée à la surface de glissement (8).

12. Elément glissant selon la revendication 10 ou 11, **caractérisé en ce que** la nervure (12) s'étend au moins sur la longueur de la partie (5) de faible diamètre.

13. Elément glissant selon l'une des revendications 10 à 12, **caractérisé en ce que** le diamètre D₂ de l'enveloppante (30) des nervures (12) est plus grand que le diamètre D₃ de la partie (5) de faible diamètre.

14. Elément glissant selon l'une des revendications 10 à 13, **caractérisé en ce que** le diamètre D₂ de l'enveloppante (30) est plus petit que le diamètre D₄ de la partie (6) de fort diamètre.

15. Elément glissant selon l'une des revendications 10 à 14, **caractérisé en ce que** le diamètre D₁ du bouchon glissant (10) est plus petit que le diamètre D₃ de la partie (5) de faible diamètre.
